# EUROPÄISCHE PATENTSCHRIFT

(11) **EP 1 542 918 B1**
(45) Veröffentlichungstag und Bekanntmachung des Hinweises auf die Patenterteilung: **16.11.2016**
(21) Anmeldenummer: 03797971.3
(22) Anmeldetag: 25.09.2003
(51) Int. Cl.: B65H 7/12

(54) **GREIFEINRICHTUNG MIT MITTELN ZUM DETEKTIEREN VON DOPPELZUFUHR UND IHR BETRIEBSVERFAHREN**
GRIPPING DEVICE COMPRISING MEANS FOR DETECTING DOUBLE FEEDING AND METHOD FOR THE OPERATION THEREOF
DISPOSITIF DE PRÉHENSION MUNI DE MOYENS DE DÉTECTION D'UNE DOUBLE ALIMENTATION ET PROCÉDÉ D'UTILISATION CORRESPONDANT

(30) Priorität: 26.09.2002 AT 14562002
(43) Veröffentlichungstag der Anmeldung: 22.06.2005
(73) Patentinhaber: Trumpf Maschinen Austria GmbH & CO. KG., 4061 Pasching (AT)
(72) Erfinder: STRASSER, Hagen, A-4061 Pasching (AT); SPERRER, Gerhard, 4554 Oberschlierbach (AT)
(74) Vertreter: Ofner, Clemens
(86) Internationale Anmeldenummer: PCT/AT2003/000282
(87) Internationale Veröffentlichungsnummer: WO 2004/028939

(56) Entgegenhaltungen:
- US-A- 5 899 341
- PATENT ABSTRACTS OF JAPAN Bd. 1995, Nr. 05, 30. Juni 1995 (1995-06-30) -& JP 07 053095 A (MURATA MACH LTD), 28. Februar 1995 (1995-02-28)

## Beschreibung

Die Erfindung betrifft eine Greifeinrichtung, wie im Oberbegriff des Anspruchs 1 beschrieben sowie ein V erfahren zum Betrieb der Greifeinrichtung wie im Oberbegriff des Anspruchs 8 beschrieben.

Eine solche Greifeinrichtung und ein solches Verfahren sind aus dem Dokument JP 07 053095 A bekannt.

Bei der Werkstückmanipulation mit automatisierten Handhabungseinrichtungen, sogenannter Roboter, bei denen mittels Greifeinrichtung die Werkteile aus einer Bereitstellung ergriffen und zur Bearbeitung an eine Fertigungseinrichtung zuzuführen sind, treten oftmals bei einem Stapel von geschnittenen oder gestanzten flachen Werkteilen, wie Blechen, Störungen bei der Zufuhr dadurch auf, dass die Werkteile, bedingt durch Oberflächenverunreinigungen, z.B. durch einen Ölfilm von Schneid- oder Stanzöl, aneinander haften und anstelle eines Einzelwerkstückes zwei oder mehr der Werkstücke von der Greifeinrichtung, z.B. einem Sauggreifer, Magnetgreifer etc., angehoben werden und damit Störungen im Fertigungsablauf eintreten.

Aus dem Stand der Technik sind nun Möglichkeiten zur Abhilfe bekannt, wobei eine Möglichkeit darin besteht, die Greifeinrichtung mit einer Gewichtssensorik auszustatten, um anhand des an der Greifeinrichtung ermittelten Gewichts mit im Rechner hinterlegten Parametern auf die ergriffenen Stücke zu schließen und gegebenenfalls eine Werkteiltrennung durchzuführen.

Eine weitere Möglichkeit, die der Stand der Technik bietet, besteht darin, nach dem Ergreifen des Werkteils eine optische Vermessung, z.B. eines Dickenmaßes vorzunehmen und aus dem ermittelten Maß nach in einem Rechner hinterlegten Parametern daraus die Anzahl der ergriffenen Werkteile zu ermitteln, um bei Bedarf eine Teiletrennung nachfolgend durchzuführen. Weiters sind auch Ultraschall-, Wirbelstrom- und magnetische Messverfahren bekannt mittels der ebenfalls eine Gesamtdicke ermittelt wird und daraus, wie bereits bei der optischen Vermessung ausgeführt, die weitere Vorgangsweise bestimmt wird.

Weiters ist es auch bekannt, vor dem Ergreifen von Werkteilen, bei denen die Möglichkeit eines Aneinanderhaftens besteht, eine Vereinzelungsvorrichtung vorzusehen. Derartige Vorrichtungen erfordern jedoch einen hohen Aufwand an mechanischen Komponenten und ist deren Betrieb mit erhöhten Steuerungs- und Kontrollaufwand verbunden.

Aufgabe der Erfindung ist es nunmehr eine Greifeinrichtung für eine Handhabungseinrichtung zu schaffen, die ein rasches Erkennen der Anzahl der von der Greifeinrichtung aufgenommenen Werkteilen ermöglicht und bei geringem Gewicht und gedrängter Bauweise der Greifeinrichtung realisierbar ist.

Diese Aufgabe der Erfindung wird durch die im Kennzeichenteil des Anspruches 1 wiedergegebenen Merkmale erreicht. Die Kontrolle, ob es sich bei dem aufgenommenen Werkteil um einen Einzelteil oder um mehrere Teile handelt, und ob es sich um den richtigen Werkteil handelt, wird unmittelbar am Greiferkopf durchgeführt. Durch die Auswertung des Frequenzspektrums der Schwingungen im Werkteil erfolgt ein Vergleich mit hinterlegten Kennlinien umnittelbar am Greiferkopf. Die großen Datenmengen, die für eine Analyse erforderlich sind, belasten damit nicht zusätzlich das für Steuerungsmaßnahmen der Handhabungseinrichtung und des Greiferkopfes bestehende Kommunikationssystem, insbesondere ein Bus-System.

Möglich ist aber auch eine Ausbildung nach Anspruch 2, weil dadurch unmittelbar an der Erregerquelle die für eine Schwingungsanalyse am erfassten Werkteil maßgeblichen Daten aus dem Erregerimpuls ermittelt werden, wodurch störende Einflüsse vermieden werden und für die Analyse eine geringere Schwingungsbandbreite für die Basisdaten herangezogen werden kann und damit die Verfahrenssicherheit größer ist.

Es ist aber auch eine Ausbildung nach Anspruch 3 vorteilhaft wodurch Leitungsverbindungen entfallen.

Weiters ist eine Ausbildung nach Anspruch 4 vorteilhaft, wodurch eine einfache störungssichere Erregerquelle zur Erzeugung von Schwingungen im Werkteil vorliegt.

Gemäß der im Anspruch 5 gekennzeichneten Ausführung, kann vorteilhaft ein durch die hohe Anwendungshäufigkeit bewährtes Fühlerelement zum Einsatz gelangen.

Gemäß der im Anspruch 6 beschriebenen vorteilhaften Lösung, werden die vom Beschleunigungssensor ermittelten Frequenzspektren unabhängig vom Frequenzverlauf vergleichbar.

Eine weitere vorteilhafte Ausbildung beschreibt der Anspruch 7, wodurch eine kompakte Bauform erreicht wird und Erregerquelle und Messquelle über einen Kontaktpunkt wirken und damit die Greifergeometrie auf das Analyseergebnis ohne Einfluss bleibt.

Die Aufgabe der Erfindung wird auch durch die im Kennzeichenteil des Verfahrensanspruchs 8 wiedergegebenen Merkmale erreicht.

Zum besseren Verständnis der Erfindung wird diese anhand der in den Fig. dargestellten Ausführungsbeispielen näher erläutert.

Es zeigen:
- Fig. 1: eine erfindungsgemäße Greifeinrichtung in schematischer Darstellung;
- Fig. 2: eine mögliche Anordnung auf einem Greifkopf;
- Fig. 3: Schwingungs-Impulsdiagramm;
- Fig. 4: eine weitere Ausbildung der erfindungsgemäßen Greifeinrichtung;
- Fig. 5: eine andere Ausführung der erfindungsgemäßen Greifeinrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige erfinderische oder erfindungsgemäße Lösungen darstellen.

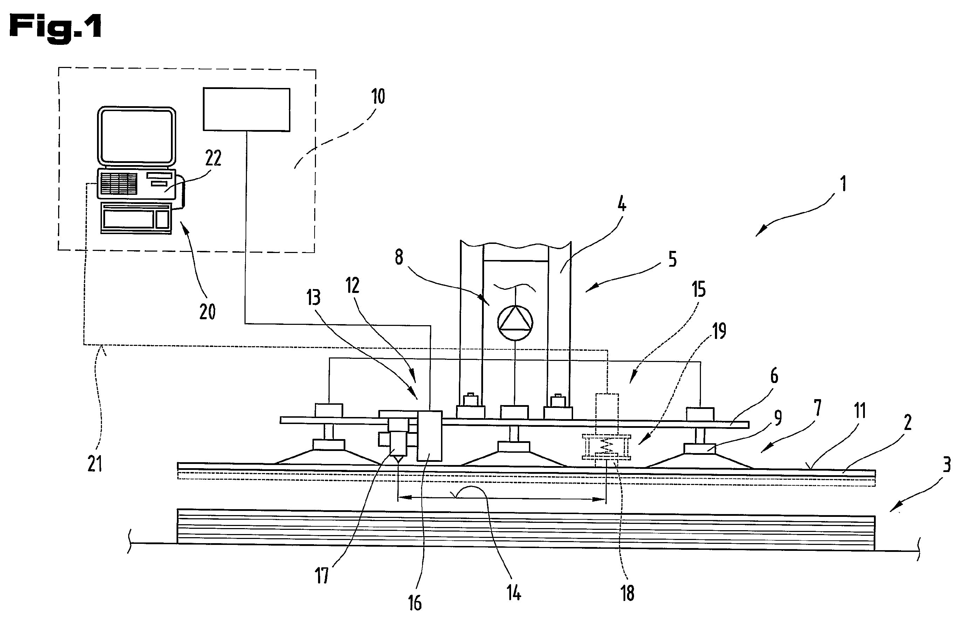

In der Fig. 1 ist in schematischer Darstellung eine Greifeinrichtung 1 zur Aufnahme von Werkteilen 2 von einem Stapel 3 der Werkteile 2, insbesondere für blechförmige Werkteile 2, gezeigt. Die Greifeinrichtung 1 ist wie dargestellt auf einem Arm 4 einer nicht weiter im Detail gezeigten Handhabungseinrichtung 5, z.B. Roboter, befestigt. Ein Greiferkopf 6 ist nach der gezeigten Ausführung mit Greifmitteln 7, z.B. mit einem Vakuumerzeuger 8, in Leitungsverbindung stehenden Saugnäpfen 9 bestückt, wobei selbstverständlich auch Magnete, Zangen etc. zum Einsatz gelangen können. Zum Abheben des Werkteils 2 vom Stapel 3 wird die Greifeinrichtung 1 im bezug auf den Stapel 3, in eine vorgegebene Greifposition mittels einer Steuer- und Kontrolleinrichtung 10 der Handhabungseinrichtung 5 positioniert und mit den Saugnäpfen 9 oder anderen Greifmitteln 7 auf eine Oberfläche 11 des Werkteils 2 aufgesetzt, die im Falle der Anwendung von Saugnäpfen 9 durch Anlagen eines Vakuums vom Vakuumerzeuger 8 ergriffen und vom Stapel 3 abgehoben werden, um einem vorzunehmenden Fertigungsvorgang, z.B. Abkanten, Stanzen, Schweißen etc., einer Fertigungsanlage mittels der Handhabungseinrichtung 5 zugeführt zu werden.

Dabei tritt vielfach das Problem auf, dass durch einen Ölfilm auf der Oberfläche 11 auf den im Stapel 3 gelagerten Werkteilen 2 diese aneinander haften und zwei oder mehr Werkteile 2 gemeinsam abgehoben werden, wie dies in der Fig. 1 dargestellt ist.

Zur Lösung des Problems weist die erfindungsgemäße Greifeinrichtung 1 am Greiferkopf 6 eine Detektiereinrichtung 12, bestehend aus einem Impulsgeber 13 und einen in einem Abstand 14 dazu angeordneten Schwingungsfühler 15 auf. Der Impulsgeber 13 wird im gezeigten Ausführungsbeispiel durch einen mittels einem Elektromagnet 16 betätigten Schlagstößel 17 gebildet, der von der Steuer- und/oder Kontrolleinrichtung 10 angesteuert wird, um durch einen Schlagimpuls im Werkteil 2 eine Schwingung zu erregen. Der Schwingungsfühler 15 zur Schwingungsdetektion vorgesehene Schwingungsfühler 15 ist beispielsweise ein Beschleunigungssensor 18, der mittels einer Andrückvorrichtung 19 mit einer vorgegebenen Kraft auf die Oberfläche 11 des von der Greifeinrichtung 1 erfassten Werkteils aufgesetzt wird. Der Beschleunigungssensor 18 ist mit einem Speicher- und/oder Analysemodul 20 über ein Bus-System 21 leitungsverbunden. Das Speicher- und/oder Analysemodul 20 ist im gezeigten Ausführungsbeispiel ein externer Rechner, der bevorzugt in der Steuer- und Kontrolleinrichtung 10 integriert ist. Es sei erwähnt, dass selbstverständlich die Datenübertragung auch drahtlos erfolgen kann.

Erfindungsgemäß ist das Speicher- und Analysemodul 20 unmittelbar am Greiferkopf 6 angeordnet, um damit die vom Beschleunigungssensor 18 ermittelten Daten unmittelbar vor Ort auszuwerten, sodass das Bus-System 21 entlastet wird und die über das Bus-System 21 an die Steuer- und Kontrolleinrichtung 10 übermittelten Daten zur Beurteilung, ob eine Einzel- oder Mehrfachaufnahme von Werkteilen 2 erfolgt ist, auf Informationsimpulse Ja/Nein beschränkt werden.

Der Vorgang zum Erkennen, ob eine Einzel- oder Mehrfachaufnahme von Werkteilen 2 erfolgt ist, ist nun nachfolgend beschrieben.

Nach dem Abheben des Werkteils 2 vom Stapel 3 erfolgt eine Ansteuerung des Impulsgebers 3, der mit seinem Schlagstößel 17 bei minimalster Kontaktzeit auf die Oberfläche 11 des Werkteiles 2 einen Schlag ausführt und damit den Werkteil 2 in Schwingungen versetzt. Mittels des Beschleunigungssensors 18 wird das Schwingungsspektrum aufgenommen und im Speicher- und/oder Analysemodul 20 mittels Fourier-Transformation aufbereitet und mit einem für den Werkteil 2 im Speicher- und/oder Analysemodul 20 hinterlegten Schwingungsspektrum verglichen. Diese Referenzkurve des Schwingungsverlaufes wird in einem Erfassungsprozess an einem Werkteil ermittelt oder in einem im Vorfeld durchgeführtem sogenannter teach-in Verfahren für einen Anzahl vorgegebener Werkteile 2 ermittelt und die Daten der Referenzkurven im Speicher- und/oder Analysemodul 20 hinterlegt. Es braucht nicht besonders ausgeführt werden, dass das Schwingungsverhalten des Werkteils 2 von Material, Dimensionen und Greifpositionen der Greifmittel sowie ganz wesentlich natürlich davon beeinflusst wird, ob ein einzelner Werkteil 2 oder mehrere aneinander haftende Werkteile 2 mit der Greifeinrichtung 1 erfasst wurden.

Selbstverständlich ist es möglich, im Speicher- und/oder Analysemodul 20 in Abhängigkeit von der Speicherkapazität für unterschiedliche Werkteile in einer Werkteilmatrix die aufbereiteten Daten des entsprechenden Schwingungsspektrums abzuspeichern und vor Beginn der Verarbeitung des jeweiligen Werkteils 2 über einen Code aufzurufen und für die Analyse auf diese Daten zuzugreifen. Dies ermöglicht eine rasche Umrüstung einer Fertigungsanlage und erhöht damit deren Kapazität und die Wirtschaftlichkeit einer derartigen Anlage.

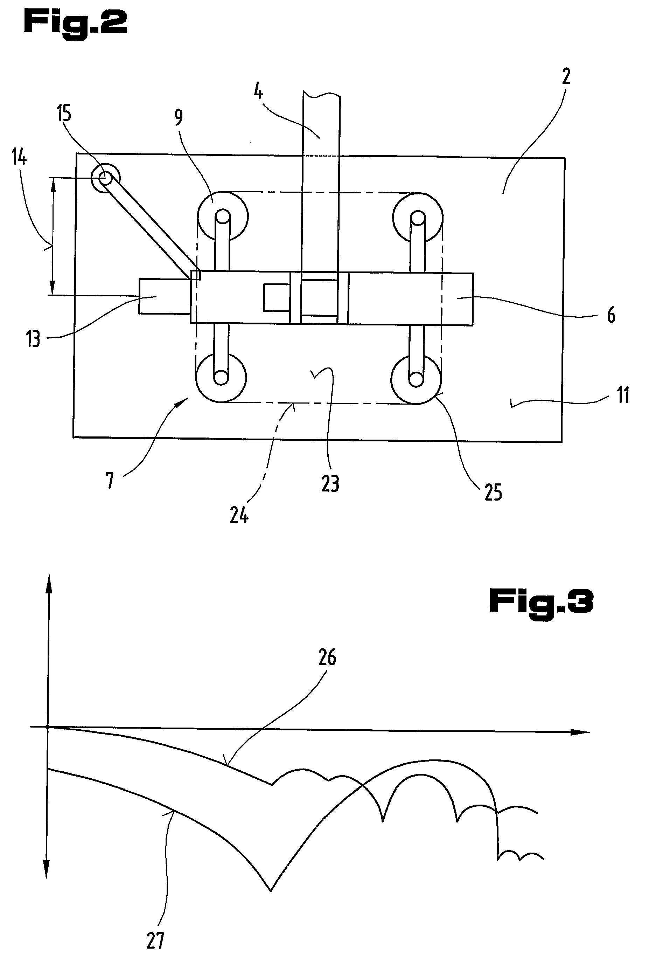

In der Fig. 2 ist nunmehr eine mögliche Anordnung für einen beispielsweise rechteckigen Zuschnitt des Werkteils 2 der Greifmittel 7 und des Impulsgebers 13 und des Schwingungsfühlers 15 auf den Greiferkopf 6 in vereinfachter Darstellung gezeigt. Für ein sicheres Analyseergebnis sind der Impulsgeber 13 und der Schwingungsfühler 15 in einem möglichst großen Abstand 14 zueinander angeordnet. Weiters sind diese auf dem Werkteil 2 möglichst außerhalb eines von den Greifmitteln 7 umgrenzten, die Schwingungsausbreitung durch eine dämpfende Wirkung behindernden Oberflächenbereiches 23 der Oberfläche 11 aufzusetzen. Insbesondere sollte eine gedachte Verbindungslinie 24 zwischen dem Impulsgeber 13 und dem Schwingungsfühler 15 nicht durch oder zwischen Kontaktpunkten 25 der Greifmittel 7 verlaufen.

Weiters ist von Entscheidung, dass ein vom Impulsgeber 13 auf den Werkteil 2 zur Schwingungserregung aufgebrachter Impulsstoß, um eine Dämpfungswirkung zu unterbinden, in einer Kontaktzeit von etwa 200 ms abläuft. Des weiteren sollte der Impulsfühler 15 von der, wie in der Fig. 1 beschriebenen Andrückvorrichtung 19, mit einem gleichmäßigen, von den Schwingungen nicht beeinflussbaren Auflagedruck an die Oberfläche 11 angelegt sein. Der Greifbereich, wie er beispielsweise durch die Kontaktpunkte 25 von den Greifmitteln 7 umgrenzt ist, ist in bezug auf die Werkteilkanten gebildeten Referenzen innerhalb geringer Toleranzen zu positionieren, wobei eine derartige Forderung auch in Hinblick auf eine Positioniergenauigkeit für anschließende Verarbeitungsprozesse ohnehin angestrebt und bei heute üblichen Handhabungseinrichtungen auch erreicht wird.

Erfindungsgemäß bilden die Detektiereinrichtung 12 (siehe Fig. 1) mit dem Impulsgeber 13, Schwingungsfühler 15 und dem Speicher und/oder Analysemodul 20 (siehe Fig. 1) eine Baueinheit, welche über Kupplungseinrichtungen am Greiferkopf 6 lös- und damit tauschbar angeordnet wird und mit der am Greiferkopf 6 zur Versorgung weiterer auf diesem angeordneten Komponenten, wie z.B. Sensoren, optische Positioniereinrichtung etc., versorgendem Bus-System zur Energie- und Datenübertragung kontaktiert wird.

In dem nun in Fig. 3 wiedergegebenen Diagramm ist in einer vereinfachten Kurvenform die Signalenergie der Schwingungsfühler vom Zeitpunkt der Schwingungserregung bis zum Abklingen der Schwingung dargestellt. Diese Signalenergie dient als Basisgröße im hinterlegten Auswertealgorithmus im Speicher- und/oder Analysemodul 20. Es sind nunmehr anhand zweier in Praxistests ermittelter Kurven die Unterschiede im Verlauf der Signalenergie dargestellt, wobei eine Kurvenlinie 26 die Signalenergie bei Schwingung eines einzelnen mit der Greifeinrichtung 1 erfassten Werkteils und eine Kurvenlinie 27 die Signalenergie bei Schwingung zweier aneinanderhaftender Werkteile 2 wiedergibt. Anhand von Messreihen konnte ermittelt werden, dass sich diese Kurvenverläufe in einem geringen Bandbreitenbereich bewegen und aufgrund der wesentlichen Unterschiede in den Kurvenverläufen auch bei Berücksichtung nicht beeinflussbarer Faktoren eine eindeutige Auswertung erreicht wird. Wie daraus zu erkennen, ist eine eindeutige Unterscheidung möglich und können entsprechende weiterführende Maßnahmen, wie Trennung von anhaftenden Werkteilen, ohne Zeitverzug unmittelbar nach der Schwingungsauswertung vorgenommen werden.

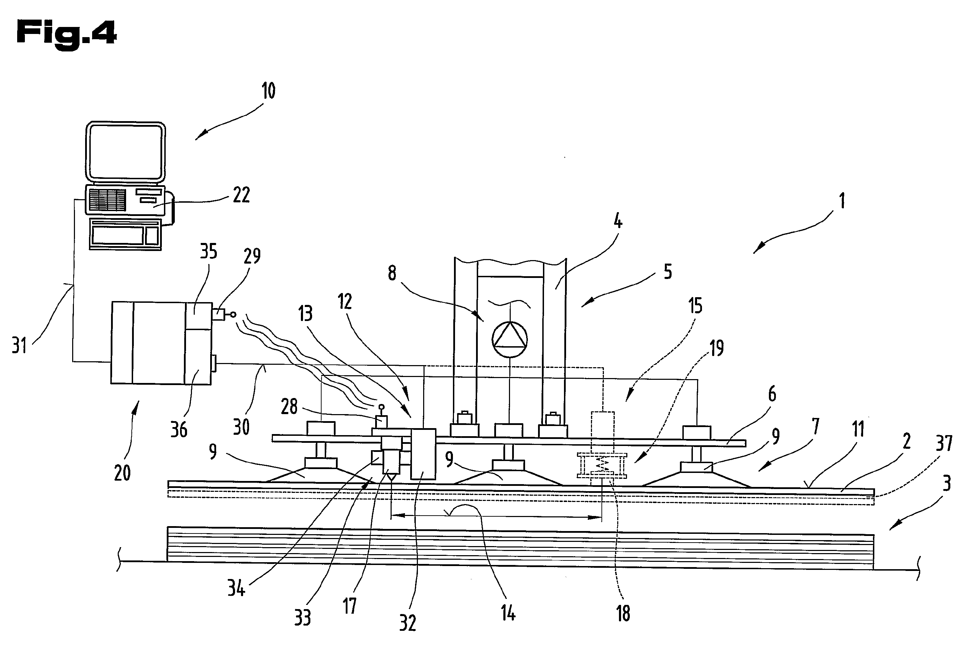

In der Fig. 4 ist nun eine weitere Ausbildung der Greifeinrichtung 1 in vereinfachter schematischer Darstellung gezeigt. Diese weitere mögliche Ausbildung der Greifeinrichtung 1 weist den Greiferkopf 6 mit den Greifmitteln 7, z.B. den Saugnäpfen 9, auf. Der Greifkopf 6 ist auf dem Arm 4 der nicht weiters dargestellten Handhabungseinrichtung 5 befestigt. Weiters ist am Greiferkopf 6 der Impulserreger 13 angeordnet, der beispielsweise über ein Sende- und Empfangsmodul 28 in drahtloser Kommunikationsverbindung mit einem weiteren Sende- und Empfangsmodul 29 des Speicher- und/oder Analysemoduls 20 steht. Für die Energieversorgung des Impulserregers 13 ist dieser an das Bus-System 21 über eine Leitung 30 versorgt. Das Speicher- und/oder Analysemodul 20 ist über eine Leitung 31 oder ebenfalls drahtlos mit der Steuer- und Kontrolleinrichtung 10 in Verbindung.

Der Impulsgeber 13 weist den Schlagstößel 17 auf, der mittels eines Antriebes 32 mit einer vorgegebenen Schlagenergie auf den von der Greifeinrichtung 1 erfassten Werkteil 2 einen vorgegebenen Schlagimpuls abgibt. Weiters ist der Schwingungserreger 13 mit einem Fühlerelement 33, z.B. einem Piezosensor 34, versehen. Dieses Fühlerelement 33 dient der Ermittlung der Beschleunigung des Schlagstößels 17 zur Impulsbeaufschlagung des Werkteils 2 und der Ermittlung der Verzögerung nach der Impulsaufbringung.

In einem Rechnermodul 35 des Speicher- und/oder Analysemoduls 20, insbesondere einem µController, werden die ermittelten Beschleunigungs- und Verzögerungsdaten ausgewertet und mit in einem Speichermodul 36 hinterlegten Referenzdaten verglichen und ist nach diesem Vergleich festzustellen, ob von der Greifeinrichtung 1 ein einzelnes Werkstück 2 oder zwei oder mehrere über einen Ölfilm 37 oder durch einen Schneidgrat etc. aneinander haftender Werkteile 2 erfasst wurden, da eine aus der Beschleunigung und der Verzögerung des Schlagstößels 17 gebildete Verhältniszahl ein eindeutiges Analyseergebnis bildet.

Um die Analyseergebnisse noch weiter zu verfeinern ist es zudem möglich, zusätzlich zu dem mit dem Fühlerelement 33 ausgestattete Impulserreger 13, wie in strichlierten Linien gezeigt, den Greiferkopf 6 mit dem bereits vorhergehenden beschriebenen Schwingungsfühler 15 auszustatten. Dabei wird zur Bewertung ob ein einzelner Werkteil 2 oder mehrere aufgenommen wurden, sowohl das Analysenergebnis aus der Impulsanalyse sowie aus der Schwingungsanalyse herangezogen und damit eine hohe Analysesicherheit erzielt.

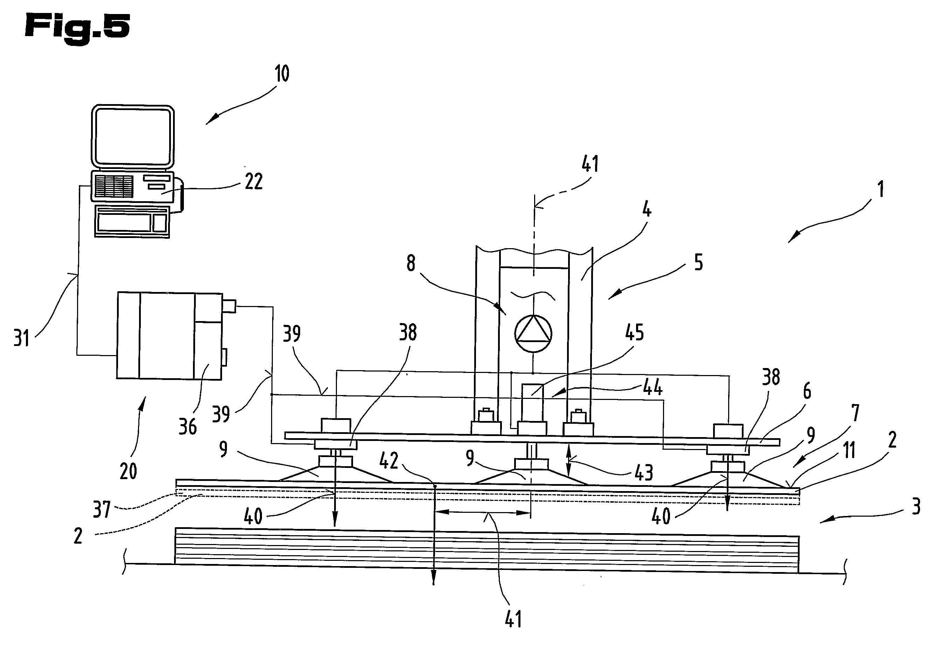

In der Fig. 5 ist eine andere Ausbildung der erfindungsgemäßen Greifeinrichtung 1 gezeigt. Nach dieser Ausführung ist der Greiferkopf 6 zur Aufnahme eines Werkteils 2 mit von dem Vakuumerzeuger 8 beaufschlagten Saugnäpfen 9, die nach dieser Ausführung beispielsweise die Greifmittel 7 bilden, bestückt. Mittels des Armes 4 der Handhabungseinrichtung 5 werden die Saugnäpfe 9 auf die Oberfläche 11 des auf dem Stapel 3 bereitgestellten Werkteils 2 aufgesetzt und durch Anlage des Vakuums vom Stapel 3 abgehoben. Zumindest eines der Greifmittel 7, im konkreten Ausführungsbeispiel 2 davon, sind über Drucksensoren 38 zur Ermittlung einer durch das Gewicht des Werkteils 2 bewirkten Kraft (Druck- oder Zugkraft) am Greiferkopf 6 abgestützt.

Beim Anheben des Werkteils 2 vom Stapel 3 werden von den Drucksensoren 38 aufgenommene Messwerte für die Kraft über Messleitungen 39 an das Speicher- und/oder Analysemodul 20 geleitet und in diesem mit hinterlegten Gewichtsdaten des zu einer weiteren Verarbeitung vorgesehenen Werkteils 2 verglichen. Damit ist feststellbar, ob von der Greifeinrichtung 1 ein Werkteil 2 oder, wie in strichlierten Linien gezeigt, durch Anhaftung z.B. infolge eines Ölfilms 37 zwei oder mehrere der Werkteile 2 aufgenommen wurden.

Weiters ist durch Vergleich der von den Drucksensoren 38 gelieferten Messdaten der in Folge des Gewichts des Werkteils 2 gemessenen Druckkräfte gemäß - Pfeil 40 - von zumindest zwei am Werkteil 2 anwirkenden Greifmitteln 7 ob der Werkteil 2 in Bezug auf eine Referenzlage lagerichtig ergriffen wurde. Dies erfolgt über die entsprechend den Kraftkomponenten ermittelte Lage bzw. eines Abstandes 41 des Schwerpunktes 42 des Werkteils 2 in Bezug auf die Referenzlage.

Das Speicher- und/oder Analysemodul 20 ist selbstverständlich, wie bereits vorhergehend beschrieben, über die Leitung 31 mit der Steuer- und Kontrolleinrichtung 10 und Rechner 22 leitungsverbunden und weist das Speichermodul 36 auf. Wie aber auch bereits erwähnt ist eine drahtlose Kommunikation ebenso möglich.

Wie nun weiters der Fig. 5 zu entnehmen, ist eine Trennung mehrerer durch Anhaftung aufgenommener Werkteile 2 durch die Anordnung eines in zur Oberfläche 11 des Werkteils 2 senkrecht verlaufenden Richtung gemäß - Doppelpfeil 43 - verstellbaren Greifmittels 7 möglich. Dazu ist beispielsweise ein mittiges Greifmittel 7 mittels eines Verstellantriebes 44, z.B. einen mit einem Druckmedium beaufschlagbaren Druckzylinder 45 am Greiferkopf 6 gelagert. Durch diese Anordnung ist es möglich die Werkteile 2 aus der gestreckten in eine gewölbte Lage zu verformen wobei der anhaftende Werkteil 2 diese Umformung nicht vollständig mitmacht und eine Auffächerung in Randbereichen eintritt und letztlich ein Ablösen des anhaftenden Werkteils 2 durch Verminderung der Saugwirkung bei Lufteintritt in die Verbindungsfläche erfolgt.

Der Ordnung halber sei abschließend darauf hingewiesen, dass zum besseren Verständnis des Aufbaus der Greifeinrichtung diese bzw. deren Bestandteile teilweise unmaßstäblich und/oder vergrößert und/oder verkleinert dargestellt wurden.

Es sei noch erwähnt, dass die einzelnen in den Fig. 1, 2, 3; 4; 5 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Greifeinrichtung | 36 | Speichermodul |
| 2 | Werkteil | 37 | Ölfilm |
| 3 | Stapel | 38 | Drucksensor |
| 4 | Arm | 39 | Messleitung |
| 5 | Handhabungseinrichtung | 40 | Pfeil |
| | | | |
| 6 | Greiferkopf | 41 | Abstand |
| 7 | Greifmittel | 42 | Schwerpunkt |
| 8 | Vakuumerzeuger | 43 | Doppelpfeil |
| 9 | Saugnapf | 44 | Verstellantrieb |
| 10 | Steuer- und Kontrolleinrichtung | 45 | Druckzylinder |
| | | | |
| 11 | Oberfläche | | |
| 12 | Detektiereinrichtung | | |
| | 13 Impulsgeber | | |
| 14 | Abstand | | |
| 15 | Schwingungsfühler | | |
| | | | |
| 16 | Elektromagnet | | |
| 17 | Schlagstößel | | |
| 18 | Beschleunigungssensor | | |
| 19 | Andrückvorrichtung | | |
| 20 | Speicher- und/oder Analysemodul | | |
| | | | |
| 21 | Bus-System | | |
| 22 | Rechner | | |
| 23 | Oberflächenbereich | | |
| 24 | Verbindungslinie | | |
| 25 | Kontaktpunkt | | |
| | | | |
| 26 | Kurvenlinie | | |
| 27 | Kurvenlinie | | |
| 28 | Sende- und Empfangsmodul | | |
| 29 | Sende- und Empfangsmodul | | |
| 30 | Leitung | | |
| | | | |
| 31 | Leitung | | |
| 32 | Antrieb | | |
| 33 | Fühlerelement | | |
| 34 | Piezosensor | | |
| 35 | Rechnermodul | | |

## Patentansprüche

1. Greifeinrichtung (1) für eine Handhabungsvorrichtung (5), insbesondere für einen Roboter, für die Teilaufnahme und Beschickung einer Fertigungseinrichtung, z.B. Blechbiegemaschine, Stanzpresse, Schweißeinrichtung etc., mit einem Werkteil (2) von einem bereitgestellten Stapel (3) der Werkteile (2) mit einem mit Greifmitteln (7), z.B. Saugnäpfen (9), Magneten, Zangen etc., bestückten Greiferkopf (6) und mit einer Detektiereinrichtung (12) für den von den Greifmitteln (7) aufgenommenen Werkteil (2), wobei die Detektiereinrichtung (12) mit zumindest einem den
Werkteil (2) beaufschlagenden Impulsgeber (13) als Schwingungserreger und zumindest einem Schwingungsfühler (15) ausgebildet ist,
und mit einem Speicher- und/oder Analysemodul (20) für eine Schwingungsanalyse, **dadurch gekennzeichnet, dass** die Detektiereinrichtung (12) mit dem Speicher- und/oder Analysemodul (20) eine Baueinheit ausbildet und am Greiferkopf (6) lösbar angeordnet ist und über ein Bussystem (21), insbesondere ASi-Bus, mit einer Steuer- und/oder Kontrolleinrichtung (10) der Fertigungseinrichtung kontaktiert ist.

2. Greifeinrichtung nach Anspruch 1, **dadurch gekennzeichnet, dass** der Impulsgeber (13) mit einem Fühlerelement (33), insbesondere Piezosensor (34), versehen ist.

3. Greifeinrichtung nach Anspruch 1 oder 2, **dadurch gekennzeichnet, dass** eine Datenübertragung zwischen dem Schwingungsfühler (15) und dem Speicher- und/oder Analysemodul (20) und/oder der Steuer- und/oder Kontrolleinrichtung (10) drahtlos erfolgt.

4. Greifeinrichtung nach einem der vorhergehenden Ansprüche, **dadurch gekennzeichnet, dass** der Impulsgeber (13) durch einen mit Bewegungsenergie beaufschlagten Schlagstößel (17) gebildet ist.

5. Greifeinrichtung nach einem der vorhergehenden Ansprüche, **dadurch gekennzeichnet, dass** der Schwingungsfühler (15) durch einen auf eine Oberfläche (11) des Werkteils (2) aufsetzbaren Beschleunigungssensor (18) gebildet ist.

6. Greifeinrichtung nach Anspruch 5, **dadurch gekennzeichnet, dass** der Beschleunigungssensor (18) über eine Andrückvorrichtung (19) am Greiferkopf (6) gelagert ist.

7. Greifeinrichtung nach einem der vorhergehenden Ansprüche, **dadurch gekennzeichnet, dass** der Impulsgeber (13) mit dem Schwingungsfühler (15) versehen ist.

8. Verfahren zum Betrieb einer Greifeinrichtung (1) nach einem der Ansprüche 1 bis 7, zum Beschicken einer Fertigungseinrichtung insbesondere einer Blechbiegemaschine für die Biegeumformung mit Werkteilen (2) mit einer Handhabungseinrichtung (5), wonach die Werkteile (2) von einem Stapel (3) mit einer mit Greifmitteln (7) versehenen Greifeinrichtung (1) der Handhabungseinrichtung (5) aufgenommen werden, worauf der Werkteil (2) mit einem auf der Greifeinrichtung (1) angeordnetem von einer Steuer- und Kontrolleinrichtung (10) beaufschlagten Impulsgeber (13) in Schwingungen versetzt wird und das Schwingungsspektrum von einem auf der Greifeinrichtung(1) angeordnetem Schwingungsfühler (15) in Form von Impulssignalen aufgenommen und an ein Speicher- und/oder Analysemodul (20) geleitet und in diesem mit hinterlegten Referenzdaten des Schwingungsspektrums des Werkteils (2) verglichen werden, **dadurch gekennzeichnet, dass** der Schwingungsfühler (15) durch eine Andrückvorrichtung (19) auf eine Oberfläche (11) des Werkteils (2) angelegt wird, worauf vom Impulsgeber (13) auf den Werkteil (2) zur Schwingungserregung ein Impulssfoß mit einer Kontaktzeit von etwa 200 ms aufgebracht wird.

## Claims

1. A gripping device (1) for a handling device (5), in particular for a robot, for picking up and feeding a work part (2) from a stack (3) of work parts (2) provided to a production facility such as a sheet metal bending machine, punch press, welding equipment etc., the gripping device having a gripping head (6) equipped with gripping means (7) such as suction cups (9), magnets, pincers etc., and with a detection device (12) for the work part (2) picked up by the gripping means (7), the detection device (12) comprising at least one pulse generator (13) as vibration exciter acting upon the work part (2) and with at least one vibration sensor (15), and with a storage and/or analysis module (20) for a vibration analysis, **characterised in that** the detection device (12) forms a constructional unit with the storage and/or analysis module (20) and is detachably arranged on the gripper head (6) and is contacted via a bus system (21), in particular an ASi bus, with a controlling and/or a monitoring device (10) of the production facility.

2. The gripping device according to claim 1, **characterised in that** the pulse generator (13) is equipped with a sensor element (33), in particular a piezo sensor (34).

3. The gripping device according to claim 1 or 2, **characterised in that** data transmission between the vibration sensor (15) and the storage and/or analysis module (20) and/or the controlling and/or monitoring device (10) is performed wirelessly.

4. The gripping device according to one of the preceding claims, **characterised in that** the pulse generator (13) is formed by an impact ram (17) acted upon by motion energy.

5. The gripping device according to one of the preceding claims, **characterised in that** the vibration sensor (15) is formed by an acceleration sensor (18) placeable upon a surface (11) of the work part (2).

6. The gripping device according to claim 5, **characterised in that** the acceleration sensor (18) is mounted on the gripper head (6) via a pressing-on device (19).

7. The gripping device according to one of the preceding claims, **characterised in that** the pulse generator (13) is equipped with the vibration sensor (15).

8. A method for operating a gripping device (1) according to one of claims 1 to 7, for feeding work parts (2) to a production facility, in particular a sheet metal bending machine for reshaping, having a handling device (5), whereby the work parts (2) are picked up from a stack (3) by means of a gripping device (1) of the handling device equipped with gripping means (7), whereupon the work part (2) is set to vibrate by a pulse generator (13) acted upon by a controlling and/or monitoring device (10) arranged on the gripping device (1), and the vibration spectrum is recorded as pulse signals by a vibration sensor (15) arranged on the gripping device (1) and directed to a storage and/or analysis module (20) and compared therein to stored reference data of the vibration spectrum of the work part (2), **characterised in that** the vibration sensor (15) is placed against a surface (11) of the work part (2) by a pressing-on device (19), whereupon a pulse burst with a contact time of approx. 200 ms is applied to the work part (2) by the pulse generator (13) in order to generate vibrations.

## Revendications

1. Dispositif de préhension (1) destiné à un dispositif de manipulation (5), en particulier un robot, destiné à saisir des pièces à usiner et à alimenter un dispositif de fabrication, par exemple une cintreuse de tôles, une presse à découper, un dispositif de soudage, etc., avec une pièce à usiner (2) prélevée dans une pile préparée (3) de pièces à usiner (2) à l'aide d'une tête de préhension (6) présentant des moyens de préhension (7), par exemple des ventouses (9), des aimants, des pinces, etc., et un dispositif de détection (12) destiné à détecter la pièce à usiner (2) saisie par les moyens de préhension (7), dans lequel le dispositif de détection (12) est réalisé ayant au moins un émetteur d'impulsions (13) agissant sur la pièce à usiner (2) en tant que générateur d'oscillations, et au moins un capteur d'oscillations (15), et ayant un module de mémoire et/ou d'analyse (20) pour une analyse d'oscillations, **caractérisé en ce que** le dispositif de détection (12) constitue un ensemble avec le module de mémoire et/ou d'analyse (20), et est agencé de manière amovible au niveau de la tête de préhension (6), et est mis en contact par l'intermédiaire d'un système de bus (21), en particulier un bus ASi, avec un dispositif de commande et/ou de contrôle (10) du dispositif de fabrication.

2. Dispositif de préhension selon la revendication 1, **caractérisé en ce que** l'émetteur d'impulsions (13) est prévu avec un élément de capteur (33), en particulier un capteur piézoélectrique (34).

3. Dispositif de préhension selon la revendication 1 ou 2, **caractérisé en ce qu'**un transfert de données sans fil survient entre le capteur d'oscillations (15) et le module de mémoire et/ou d'analyse (20) et/ou le dispositif de commande et/ou de contrôle (10).

4. Dispositif de préhension selon l'une quelconque des revendications précédentes, **caractérisé en ce que** l'émetteur d'impulsions (13) est formé par un poussoir à impact (17) auquel est appliquée une énergie motrice.

5. Dispositif de préhension selon l'une quelconque des revendications précédentes, **caractérisé en ce que** capteur d'oscillations (15) est formé par un capteur d'accélération (18) pouvant être monté sur une surface supérieure (11) de la pièce à usiner (2).

6. Dispositif de préhension selon la revendication 5, **caractérisé en ce que** le capteur d'accélération-accélération (18) est agencé sur la tête de préhension (6) par l'intermédiaire d'un dispositif de pression (19).

7. Dispositif de préhension selon l'une quelconque des revendications précédentes, **caractérisé en ce que** l'émetteur d'impulsions (13) est prévu avec le capteur d'oscillations (15).

8. Procédé pour faire fonctionner un dispositif de préhension (1) selon l'une quelconque des revendications 1 à 7, pour alimenter un dispositif de fabrication, en particulier une cintreuse de tôles pour le cintrage de pièces à usiner (2) à l'aide d'un dispositif de manipulation (5), où les pièces à usiner (2) sont prélevées à partir d'une pile (3) à l'aide d'un dispositif de préhension (1) du dispositif de manipulation (5) prévu avec des moyens de préhension (7), après quoi la pièce à usiner (2) est mise en oscillation par un émetteur d'impulsions (13) agencé sur le dispositif de préhension (1) et sollicité par un dispositif de commande et/ou de contrôle (10), et le spectre des vibrations est capté par un capteur d'oscillations (15) agencé sur le dispositif de préhension (1) sous la forme de signaux d'impulsions et enregistré dans un module de mémoire et/ou d'analyse (20), et est comparé dans celui-ci avec des données de référence préenregistrées du spectre d'oscillations de la pièce à usiner (2), **caractérisé en ce que** le capteur d'oscillations (15) est agencé sur une surface supérieure (11) de la pièce à usiner (2) par l'intermédiaire d'un dispositif de pression (19), après quoi une impulsion provenant de l'émetteur d'impulsions (13) va être appliquée avec un temps de contact d'environ 200 ms sur la pièce à usiner (2) pour générer des oscillations.
